# EUROPEAN PATENT APPLICATION

(11) **EP 3 955 262 A1**
(43) Date of publication of application: **16.02.2022**
(21) Application number: 20806795.9
(22) Date of filing: 11.03.2020
(51) Int. Cl.: G21D 3/08

(54) **PRESSURIZED WATER-TYPE NUCLEAR POWER PLANT AND METHOD FOR OPERATING PRESSURIZED WATER-TYPE NUCLEAR POWER PLANT**

(30) Priority: 10.05.2019 JP 2019090100
(71) Applicant: MITSUBISHI HEAVY INDUSTRIES, LTD., Chiyoda-ku, Tokyo 100-8332 (JP)
(72) Inventor: ISHIHARA, Nobuo, Tokyo 100-8332 (JP); YAMAZAKI, Shingo, Tokyo 100-8332 (JP)
(74) Representative: Cabinet Beau de Loménie
(86) International application number: PCT/JP2020/010661
(87) International publication number: WO 2020/230432

(57) **Abstract**

To reduce a corrosion damage risk to a heat transfer tube of a steam generator while suppressing the use of chemicals having environmental effects. A pressurized water nuclear power plant includes a hydrogen supply unit configured to supply hydrogen to a water single phase part of a secondary system, a hydrogen concentration measuring unit configured to measure hydrogen concentration in the water single phase part, and a control unit configured to control supply of hydrogen by the hydrogen supply unit so that the hydrogen concentration measured by the hydrogen concentration measuring unit exceeds 10 ppb.

## Description

### Field

The present invention relates to a pressurized water nuclear power plant and an operation method of the pressurized water nuclear power plant.

### Background

From the viewpoint of ensuring the integrity of a steam generator in a pressurized water nuclear power plant, it is known that hydrazine is injected into a water single phase part of a secondary system. The use of hydrazine allows oxygen concentration in water of the steam generator to be controlled at a low level, thereby reducing a corrosion damage risk to the steam generator.

However, for the use of hydrazine, a carcinogenic risk has been pointed out, and strengthening of regulations on the use are being advanced.

For example, a plant operation method and a system described in Patent Literature 1 aim to reliably inhibit corrosion of structural materials such as pipes and the like without injecting chemicals having environmental effects or other effects. Specifically, in Patent Literature 1, in a secondary system of the pressurized water nuclear power plant, an oxidizer is injected during supply of high-temperature feedwater to form, on surfaces of structural materials of a feedwater pipe that is in contact with the high-temperature feedwater, a low-pressure feedwater heater, a deaerator, and a high-pressure feedwater heater, an oxide film that inhibits the elution of elements constituting the structural materials, while an corrosion inhibitor is injected during the supply of the feedwater, so as to cause the corrosion inhibitor to adhere to the oxide film on the surfaces of the structural materials in an area where corrosion accelerated by a flow of the feedwater occurs, and the corrosion inhibitor is an oxide or a hydroxide including one or more elements selected from Ti, Zr, Ce, Nb, La, Nd, and Y. In Patent Literature 1, it is also characterized that hydrogen is injected into the feedwater flowing through the structural materials.

### Citation List

### Patent Literature

Patent Literature 1: Patent No. 5637867

### Summary

### Technical Problem

However, in Patent Literature 1, a feedwater pipe from a condenser to the steam generator is targeted as a structural material for which corrosion is inhibited, and an attempt is made to suppress the elution of iron from the structural material and reduce an amount of iron brought into the steam generator so as to suppress decrease in the heat transfer coefficient of a heat transfer tube of the steam generator. Therefore, in Patent Literature 1, the corrosion damage risk to the heat transfer tube of the steam generator is not reduced.

The present invention has been made to solve the above-described problem, and an object of the present invention is to provide a pressurized water nuclear power plant and an operation method of the pressurized water nuclear power plant capable of reducing the corrosion damage risk of a heat transfer tube of a steam generator while suppressing the use of chemicals having environmental effects.

### Solution to Problem

In order to achieve the object described above, a pressurized water nuclear power plant according to one aspect of the present invention includes a hydrogen supply unit configured to supply hydrogen to a water single phase part of a secondary system; a hydrogen concentration measuring unit configured to measure a hydrogen concentration in the water single phase part; and a control unit configured to control supply of hydrogen by the hydrogen supply unit so that the hydrogen concentration measured by the hydrogen concentration measuring unit exceeds 10 ppb.

In order to achieve the object described above, an operation method of a pressurized water nuclear power plant according to one aspect of the present invention includes a step of supplying hydrogen to a water single phase part of a secondary system so that hydrogen concentration exceeds 10 ppb.

### Advantageous Effects of Invention

According to the present invention, deoxidization by supplying hydrogen to the water single phase part can reduce the corrosion damage risk to the heat transfer tube of the steam generator while suppressing the use of chemicals having environmental effects.

### Brief Description of Drawings

FIG. 1 is a schematic diagram of a pressurized water nuclear power plant according to a first embodiment of the present invention.
FIG. 2 is a schematic diagram of the pressurized water nuclear power plant according to the first embodiment of the present invention.
FIG. 3 is a flowchart indicating an operation method of the pressurized water nuclear power plant according to the first embodiment of the present invention.
FIG. 4 is a schematic diagram of the pressurized water nuclear power plant according to a second embodiment of the present invention.
FIG. 5 is a schematic diagram of the pressurized water nuclear power plant according to the second embodiment of the present invention.
FIG. 6 is a flowchart indicating an operation method of the pressurized water nuclear power plant according to the second embodiment of the present invention.

### Description of Embodiments

The following describes in detail the embodiments according to the present invention based on the drawings. The present invention is not limited by these embodiments. The components in the following embodiments include components that are replaceable by and easy for those skilled in the art, or those that are substantially the same.

### First embodiment

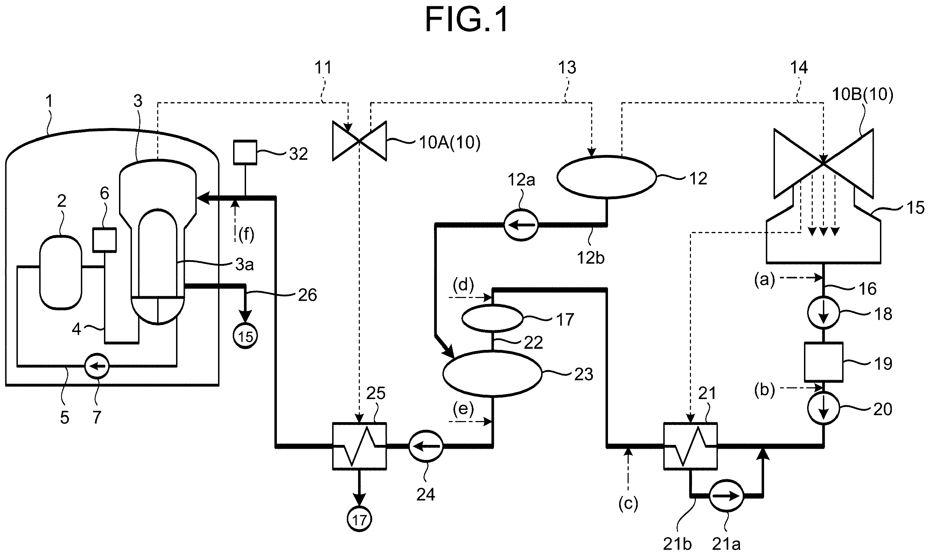

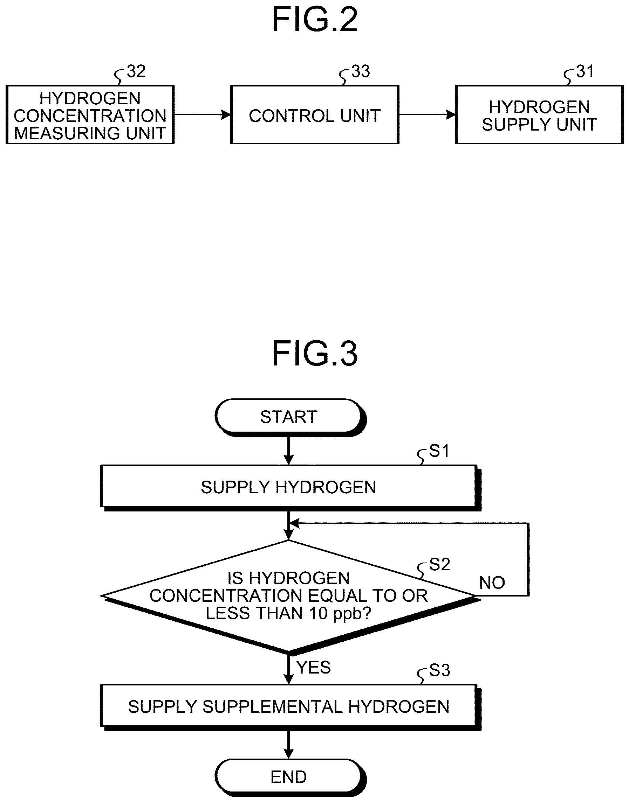

FIG. 1 is a schematic diagram of a pressurized water nuclear power plant according to a first embodiment. FIG. 2 is a schematic diagram of a pressurized water nuclear power plant according to a first embodiment. FIG. 3 is a flowchart indicating an operation method of the pressurized water nuclear power plant according to the first embodiment.

As illustrated in FIG. 1, the pressurized water nuclear power plant includes a reactor containment vessel 1 that stores thereinside a nuclear reactor 2 and a steam generator 3. The nuclear reactor 2 and the steam generator 3 are connected via cooling water pipes 4 and 5. The cooling water pipe 4 is provided with a pressurizer 6, and the cooling water pipe 5 is provided with a cooling water pump 7.

The nuclear reactor 2 is a pressurized water reactor (PWR), and the interior thereof is filled with primary cooling water. The nuclear reactor 2 houses a large number of fuel assemblies, and a large number of control rods, which control the fission of nuclear fuel in fuel rods of the fuel assemblies, are provided in an insertable manner into the respective fuel assemblies.

When the nuclear fuel in the fuel rods of the fuel assemblies is fissioned while fission reaction is controlled by the control rods, thermal energy is generated by this fission. The generated thermal energy heats the primary cooling water, and the heated primary cooling water is sent to a heat transfer tube 3a of the steam generator 3 via the cooling water pipe 4. On the other hand, the primary cooling water sent from the heat transfer tube 3a of the steam generator 3 via the cooling water pipe 5 flows into the nuclear reactor 2 and cools inside of the nuclear reactor 2.

The steam generator 3 allows the high-temperature, high-pressure primary cooling water to pass through the heat transfer tube 3a and to exchange heat with the secondary cooling water supplied outside the heat transfer tube 3a, so as to evaporate the secondary cooling water to generate vapor while cooling the high-temperature, high-pressure primary cooling water. The pressurizer 6 suppresses boiling of the primary cooling water by pressurizing the high-temperature primary cooling water. The cooling water pump 7 circulates the primary cooling water in a reactor cooling system, and feeds the primary cooling water from the steam generator 3 to the nuclear reactor 2 via the cooling water pipe 5, while feeding the primary cooling water from the nuclear reactor 2 to the steam generator 3 via the cooling water pipe 4. The primary cooling water circulates between the nuclear reactor 2 and the steam generator 3. The primary cooling water is light water used as a coolant and a neutron moderator. Such a system in which the high-temperature water heated by using the heat of the nuclear reactor 2 is sent to the steam generator 3 to exchange heat and then recovered is called a primary system.

The steam generator 3 is connected to a steam turbine 10. The steam turbine 10 includes a high-pressure turbine 10A and a low-pressure turbine 10B, and is connected to a generator. The steam generator 3 is connected to the high-pressure turbine 10A via a cooling water pipe 11. A moisture separation heater 12 is disposed between the high-pressure turbine 10A and the low-pressure turbine 10B. The moisture separation heater 12 is connected to the high-pressure turbine 10A via a low-temperature reheat tube 13, and to the low-pressure turbine 10B via a high-temperature reheat tube 14. Furthermore, the low-pressure turbine 10B of the steam turbine 10 includes a condenser 15. The condenser 15 is configured to supply and discharge cooling water (for example, seawater). The condenser 15 is connected to a deaerator 17 via the cooling water pipe 16. The cooling water pipe 16 is provided with, in order from the condenser 15 side, a condensate pump 18, a condensate desalination unit 19, a condensate booster pump 20, and a low-pressure feedwater heater 21. The deaerator 17 is connected to the steam generator 3 via the cooling water pipe 22. The cooling water pipe 22 is provided with, in order from the deaerator 17 side, a storage tank 23, a feedwater pump 24, and a high-pressure feedwater heater 25, For the condensate pump 18 and the condensate booster pump 20, the condensate pump 18 sends the secondary cooling water (pure water) from the condenser 15 to the condensate desalination unit 19 via the cooling water pipe 16, and the condensate booster pump 20 sends, through the low-pressure feedwater heater 21, the secondary cooling water to the deaerator 17 via the cooling water pipe 16. The feedwater pump 24 then sends, through the high-pressure feedwater heater 25, the secondary cooling water to the steam generator 3 via the cooling water pipe 22. The deaerator 17 sends, via the cooling water pipe 22, the secondary cooling water after being deaerated in the deaerator 17.

Steam from the secondary cooling water produced as a result of the heat exchange with the high-pressure, high-temperature primary cooling water in the steam generator 3 is distributed to the high-pressure turbine 10A and the low-temperature reheat tube 13 through the cooling water pipe 11. A distribution ratio of this distribution can be set optionally. The steam distributed to the high-pressure turbine 10A is introduced to the high-pressure feedwater heater 25 after driving the high-pressure turbine 10A. The high-pressure feedwater heater 25 drains the condensate water condensed from the high pressure steam to the deaerator 17. The highly pressurized exhaust from the high-pressure turbine 10A is distributed to the low-temperature reheat tube 13 and introduced into the moisture separation heater 12. The moisture separation heater 12 heats the introduced steam and separate the heated introduced steam into liquid and gas. The liquid separated in the moisture separation heater 12 is stored in the storage tank 23 by the moisture separation heater drain pump 12a via the moisture separation heater drain 12b. The gas separated in the moisture separation heater 12 is sent to the low-pressure turbine 10B via the high-temperature reheat tube 14. This steam (gas) drives the steam turbine 10 (high-pressure turbine 10A and low-pressure turbine 10B), thereby causing the generator to generate electricity. In other words, the steam from the steam generator 3 drives the high-pressure turbine 10A, and then, by the moisture separation heater 12, the steam is heated while moisture contained in the steam is removed, so as to drive the low-pressure turbine 10B.

The steam that has driven the steam turbine 10 (high-pressure turbine 10A and low-pressure turbine 10B) is cooled in the condenser 15 to become liquid. In the condensate desalination unit 19, components of seawater contained in the condensate are removed. The condensate (secondary cooling water) is heated by low-pressure steam extracted from the low-pressure turbine 10B in the low-pressure feedwater heater 21, and then sent to the deaerator 17 where impurities such as dissolved oxygen and non-condensable gas are removed. The secondary cooling water (condensate) is then stored in the storage tank 23, heated by the high-pressure feedwater heater 25 with the high-pressure steam extracted from the high-pressure turbine 10A, and then returned to the steam generator 3. The low-pressure feedwater heater 21 drains the condensate water condensed from the low pressure steam to the cooling water pipe 22 via the low-pressure feedwater heater drain 21b by the low-pressure feedwater heater drain pump 21a. Such a system in which steam is generated in the steam generator 3 using the high temperature water of the primary system, the steam is used to rotate the steam turbine 10 to generate electricity, and then the steam is condensed in the condenser 15 and recovered in the steam generator 3 is called a secondary system. In the secondary system, the secondary cooling water sent from the condenser 15 so as to be recovered by the steam generator 3 via the cooling water pipes 16 and 22 indicated in bold lines in FIG. 1 is for the water single phase part, and the secondary cooling water sent from the steam generator 3, used to rotate the steam turbine 10 for power generation, so as to reach the condenser 15 via the cooling water pipe 11, the low-temperature reheat tube 13, and high-temperature reheat tube 14 indicated in dashed lines in FIG. 1 is for steam (gas-liquid two-phase part).

The steam generator 3 is connected to a blowdown pipe 26 to discharge non-volatile impurities that are concentrated by evaporation in the steam generator 3. The blowdown pipe 26 is connected to the condenser 15 via a flow control valve and a flash tank, and drains the secondary cooling water inside the steam generator 3 to the condenser 15.

In the above-described configuration, the pressurized water nuclear power plant of the first embodiment includes a hydrogen supply unit 31, a hydrogen concentration measuring unit 32, and a control unit 33, as indicated in FIG. 2.

The hydrogen supply unit 31 supplies hydrogen to the water single phase part of the secondary system. The hydrogen supply unit 31 is connected to the cooling water pipes 16 and 22 indicated in bold lines in FIG. 1, which constitute the water single phase part of the secondary system, and supplies hydrogen to the water single phase part. A portion to which the hydrogen supply unit 31 is connected only needs to be within the cooling water pipes 16, 22. For example, as illustrated in FIG. 1, it is a portion (a) between the condenser 15 and the condensate pump 18, a portion (b) between the condensate desalination unit 19 and the condensate booster pump 20, portions (c) or (d) between the low-pressure feedwater heater 21 and the deaerator 17 in the cooling water pipe 16, and a portion (e) between the storage tank 23 and the feedwater pump 24, a portion (f) between the high-pressure feedwater heater 25 and the steam generator 3 in the cooling water pipe 22, and other portions. A portion to which the hydrogen supply unit 31 is connected may be one or more portions. The hydrogen supply unit 31 includes a pipe that connects a cylinder filled with hydrogen to the above-described portion to be connected, and a valve provided to the pipe. The hydrogen supply unit 31 may include a hydrogen generator that generates hydrogen by electrolysis of the secondary cooling water, a cylinder that stores the hydrogen generated by the hydrogen generator, a pipe that connects the cylinder to the above-described portion to be connected, and the valve provided to the pipe.

The hydrogen concentration measuring unit 32 measures hydrogen concentration in the water single phase part. The hydrogen concentration measuring unit 32 is provided before the steam generator 3, between the high-pressure feedwater heater 25 and the steam generator 3, as illustrated in FIG. 1, and samples the secondary cooling water to measure the hydrogen concentration.

The control unit 33 is, for example, a computer, and although not explicitly illustrated in the drawings, it is implemented by an arithmetic processing unit including a microprocessor such as a central processing unit (CPU). The control unit 33 controls the supply of hydrogen by the hydrogen supply unit 31 so that the hydrogen concentration measured by the hydrogen concentration measuring unit 32 exceeds a predetermined concentration.

The predetermined concentration of hydrogen to be controlled by the control unit 33 exceeds 10 ppb. The predetermined concentration of hydrogen is preferably 25 ppb or greater, and more preferably 250 ppb or greater. The upper limit of the predetermined concentration of hydrogen is, for example, 450 ppb.

Here, as before, the hydrogen concentration in the secondary system was measured while hydrazine was injected into the water single phase part of the secondary system, and it was found that a small amount of hydrogen was generated. It can be considered that the hydrogen was generated by thermal decomposition of the hydrazine and corrosion of carbon steel in the system. Specifically, the level of hydrogen was 1 µg/kg-H₂O (= ppb) in a region from the water single phase part to the inside of the steam generator 3, and 10 µg/kg-H₂O in the steam system, based on which it was found that there was a sufficient amount of hydrogen for the 1 µg/kg-H₂O level of dissolved oxygen. The hydrogen concentration in this water single phase part is only lowered by three orders of magnitude compared to 1580 pg/kg of the solubility of hydrogen at 25°C and 1 atmospheric pressure, and theoretically, the potential increases by only approximately 100 mV, which is a sufficient concentration for maintaining a reducing environment and inhibiting corrosion.

In contrast, when hydrazine is not injected, the concentration of hydrogen will be that of the injected hydrogen. However, when hydrogen is injected as a gas, the hydrogen concentration decreases in the upper part of a boiling section because the hydrogen is transferred to a gas phase part by evaporation in the steam generator 3. Under typical conditions of 280°C and a circulation ratio 4.0 of the steam generator 3, the hydrogen concentration of the upper part of the steam generator 3 is 1/250 to the hydrogen concentration in the water single phase part. Therefore, when the hydrogen concentration in the steam generator 3 is to be maintained at 1 µg/kg-H₂O, the hydrogen concentration in the water single phase part will be 250 µg/kg-H₂O, and an equilibrium partial pressure at 25°C is 0.158 atmospheric pressure and 2.8 NmL/kg-H₂O. Therefore, under the condition where hydrazine is not injected into the water single phase part of the secondary system, it is sufficient to supply, to the water single phase part, hydrogen of 250 µg/kg-H₂O, which is hydrogen the pressure of which is 0.158 atmospheric pressure, the gas volume of which is 2.8 NmL/kg-H₂O.

Because the hydrogen added to the water single phase part of the secondary system reacts with iron oxide scale and other materials on a surface of a system pipe of the secondary system, and a reduced material on the surface of the pipe reacts with oxygen to deoxygenate, it can be considered that hydrogen provides an effect of oxygen deprivation by itself, and the hydrogen concentration decreases while the hydrogen passes through the system. Therefore, supply of hydrogen is to be before (f) the steam generator 3 to inhibit the corrosion of the heat transfer tube 3a of the steam generator 3, but not limited thereto, and it is sufficient that the supply is performed upstream of the steam generator 3. The hydrogen concentration is then measured before the steam generator 3, and hydrogen is supplied so that a predetermined concentration can be provided.

In other words, in order to maintain a reducing environment and inhibit the corrosion of the heat transfer tube 3a of the steam generator 3, hydrogen is supplied to the water single phase part so that the hydrogen concentration in the water single phase part exceeds 10 ppb, preferably 250 ppb or greater when effectiveness in the upper part of the steam generator 3 is taken into consideration, and 25 ppb or greater when a decrease of one order of magnitude is allowed. The above-described amount of hydrogen supplied to the water single phase part is, in the primary system of the pressurized water nuclear power plants, below 5 NmL/kg-H₂O in the volume and 450 µg/kg-H₂O in the weight concentration, each of which is within a range controlled to prevent hydrogen explosion. In addition, based on the control in the primary system, a predetermined concentration of a maximum hydrogen concentration is preferably 450 ppb as a reference value.

Then, as illustrated in FIG. 3, in the operation of the pressurized water nuclear power plant and the operation method of the pressurized water nuclear power plant of the first embodiment, the control unit 33 controls the hydrogen supply unit 31 so as to supply hydrogen to the water single phase part of the secondary system (Step S1). The hydrogen to be supplied at step S1 may be supplied so that the hydrogen concentration in the water single phase part exceeds 10 ppb, preferably 250 ppb or greater when the effectiveness in the upper part of the steam generator 3 is taken into consideration, and 25 ppb or greater when decrease of one order of magnitude is allowed. Thereafter, the control unit 33 controls the hydrogen supply unit 31 so as to supply supplemental hydrogen to the water single phase part of the secondary system when the hydrogen concentration is the predetermined concentration or less (Step S2: Yes) so that the hydrogen concentration measured by the hydrogen concentration measuring unit 32 is the predetermined concentration (for example, hydrogen concentration exceeding 10 ppb) (Step S3). The control unit 33 waits to supply hydrogen until the hydrogen concentration measured by the hydrogen concentration measuring unit 32 becomes the predetermined concentration or less when the hydrogen concentration measured by the hydrogen concentration measuring unit 32 exceeds the predetermined concentration at step S2 (step S2: No).

Thus, the pressurized water nuclear power plant of the first embodiment includes the hydrogen supply unit 31 that supplies hydrogen to the water single phase part of the secondary system, the hydrogen concentration measuring unit 32 that measures the hydrogen concentration in the water single phase part, and the control unit 33 that controls the supply of hydrogen by the hydrogen supply unit 31 so that the hydrogen concentration measured by the hydrogen concentration measuring unit 32 exceeds 10 ppb.

The operation method of the pressurized water nuclear power plant of the first embodiment includes a step of supplying hydrogen to the water single phase part of the secondary system so that the hydrogen concentration exceeds 10 ppb.

The pressurized water nuclear power plant and the operation method of the pressurized water nuclear power plant supply hydrogen so that the hydrogen concentration in the water single phase part of the secondary system exceeds 10 ppb maintains a reducing environment and inhibits the corrosion of the heat transfer tube 3a, thereby allowing the oxygen concentration in the secondary cooling water of the secondary system of the steam generator 3 to be controlled at a low level, and reducing the corrosion damage risk to the heat transfer tube 3a of the steam generator 3. That is, it is possible not to use another hydrazine as a substitute for the hydrazine that has been conventionally used, or possible to limit the use amount of hydrazine. As a result, it is possible to reduce the corrosion damage risk to the heat transfer tube 3a of the steam generator 3 while suppressing the use of chemicals having environmental effects. Hydrogen can be supplied to any desired portion of the water single phase part. The amount of hydrogen supplied can be adjusted as needed.

By the way, it is known that carbohydrazide and other chemicals are used as a substitute for hydrazine. Carbohydrazide has an adverse effect due to impurities generated by decomposition, effect of loading on a condensate desalination column resin, and other effects. Since carbohydrazide is formed from hydrazine and carbon dioxide, use of carbohydrazide does not mean complete disuse of hydrazine. In addition, carbohydrazide will have a harmful effect in that decomposed carbon dioxide from the carbohydrazide works as an acid, slightly lowering the pH of the system, thereby causing the corrosion of carbon steel to tend to increase.

In this regard, according to the pressurized water nuclear power plant and the operation method of the pressurized water nuclear power plant of the first embodiment, hydrogen does not have any adverse effects on the system, due to impurities generated by decomposition and the impact of loading on the condensate desalination column resin or the decrease in pH in the system, like carbohydrazide has. Therefore, the supply of hydrogen can reduce the corrosion damage risk to the heat transfer tube 3a of the steam generator 3 while eliminating the use of agents such as carbohydrazide or reducing the use amount of carbohydrazide.

Moreover, the patent Literature 1 represents that hydrogen is supplied to the water single phase part of the secondary system. The supply of hydrogen in the patent Literature 1 is performed so that hydrogen dissolved during the supply of feedwater cases oxidation reaction due to a catalytic action of a corrosion inhibitor such as titanium oxide, thereby suppressing elution, in other words, oxidation reaction, of constituent elements (iron, chromium, and the like) in the structural materials such as the pipes. In Patent Literature 1, hydrogen is injected during the supply of feedwater so that the dissolved hydrogen concentration in the feedwater is at least 1 ppb or greater, for example, approximately 10 ppb. The amount of hydrogen supplied in Patent Literature 1 cannot reduce the corrosion damage risk to the heat transfer tube 3a of the steam generator 3 because hydrogen that escapes as steam in the steam generator 3 is not taken into consideration.

In this regard, the pressurized water nuclear power plant and the operation method of the pressurized water nuclear power plant according to the first embodiment take hydrogen that escapes as steam in the steam generator 3 into consideration, and supply hydrogen so that the hydrogen concentration in the water single phase part of the secondary system exceeds 10 ppb, whereby the corrosion damage risk to the heat transfer tube 3a of the steam generator 3 can be reduced.

### Second embodiment

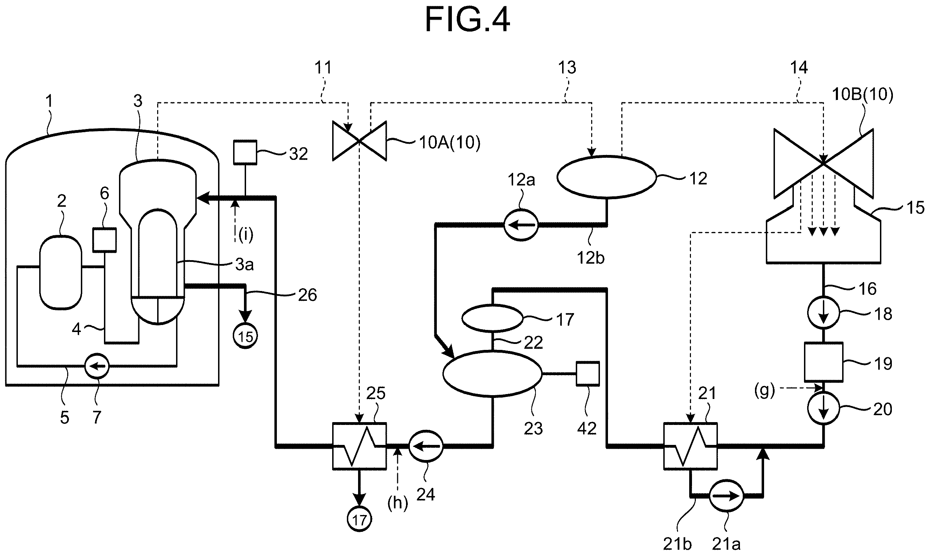

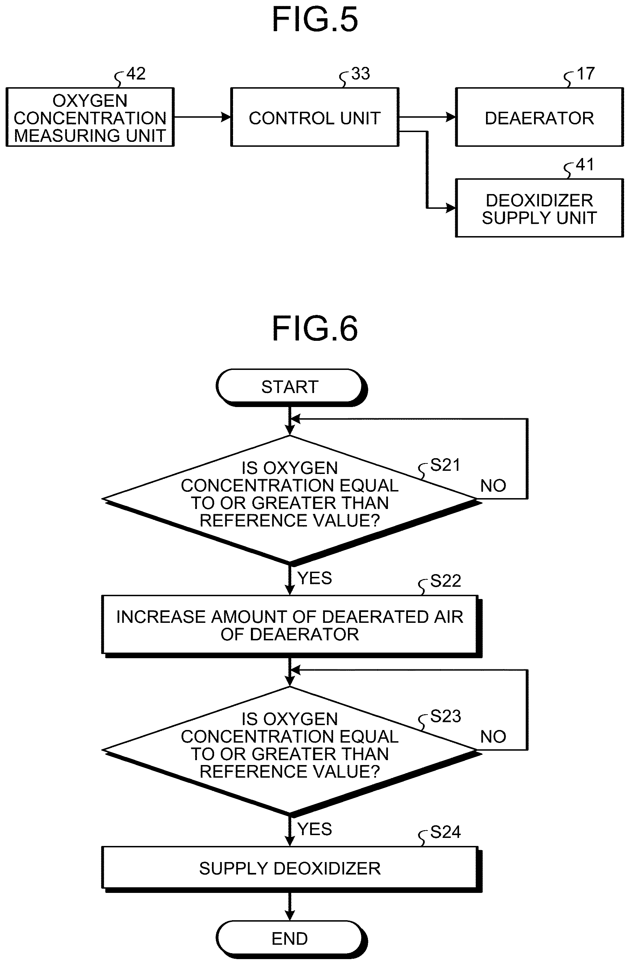

Fig. 4 illustrates a schematic diagram of a pressurized water nuclear power plant according to a second embodiment. FIG. 5 is a schematic diagram of the pressurized water nuclear power plant according to the second embodiment. FIG. 6 is a flowchart indicating an operation method of a pressurized water nuclear power plant according to the second embodiment.

The pressurized water nuclear power plant of the second embodiment further includes, with respect to the above-described first embodiment, a deoxidizer supply unit 41 and an oxygen concentration measuring unit 42, as illustrated in FIG. 5.

The deoxidizer supply unit 41 supplies deoxidizer (for example, hydrazine) to the water single phase part of the secondary system. The deoxidizer supply unit 41 is connected to the cooling water pipes 16 and 22 indicated in bold lines in FIG. 1, which constitute the water single phase part of the secondary system, and supplies hydrogen to the water single phase part. A portion to which the deoxidizer supply unit 41 is connected is on the steam generator 3 side than the condensate desalination unit 19 is in the range of the cooling water pipes 16 and 22. For example, as illustrated in FIG. 4, it is a portion (g) between the condensate desalination unit 19 and the condensate booster pump 20 in the cooling water pipe 16, and a portion (h) between the feedwater pump 24 and the high-pressure feedwater heater 25 and a portion (i) between the high-pressure feedwater heater 25 and the steam generator 3 in the cooling water pipe 22. The deoxidizer supply unit 41 may be connected to one or more portions. The deoxidizer supply unit 41 includes a deoxidizer storage in which the deoxidizer is stored, a pipe that connects the deoxidizer storage to the above-described portion to be connected, a valve provided for the pipe, and a pump provided to the pipe.

The oxygen concentration measuring unit 42 measures the oxygen concentration in the water single phase part. The oxygen concentration measuring unit 42 is provided to the storage tank 23 as illustrated in FIG. 4, and measures the oxygen concentration by sampling the secondary cooling water that has been deaerated by the deaerator 17 and the secondary cooling water that has been separated from the gas by the moisture separation heater 12. In other words, the oxygen concentration is measured immediately after the deaerator 17, which is a final stage in the secondary system where oxygen has been removed in principle. The oxygen concentration measuring unit 42 detects a minute increase in the oxygen concentration indirectly by oxidization-reduction potential. Alternatively, the oxygen concentration measuring unit 42 directly detects trace oxygen by O₂ emission analysis.

The control unit 33 controls the supply of hydrogen by the hydrogen supply unit 31 so that the hydrogen concentration measured by the hydrogen concentration measuring unit 32 exceeds a predetermined concentration, as explained in the first embodiment. In the second embodiment, the control unit 33 controls the deaerator 17 so as to increase the amount of deaerated air in the deaerator 17 when the oxygen concentration detected by the oxygen concentration measuring unit 42 is equal to or greater than the reference value (for example, 5 ppb). Furthermore, the control unit 33 controls the deoxidizer supply unit 41 to supply the deoxidizer when the oxygen concentration detected by the oxygen concentration measuring unit 42 is equal to or greater than the reference value (for example, 5 ppb).

Then, as illustrated in Fig. 6, in the operation of the pressurized water nuclear power plant and the operation method of the pressurized water nuclear power plant of the second embodiment, the control unit 33 controls the hydrogen supply unit 31 as described in the first embodiment, and when the oxygen concentration detected by the oxygen concentration measuring unit 42 is equal to or greater than the reference value (Step S21: Yes), controls the deaerator 17 so as to increase the amount of deaerated air in the deaerator 17 (Step S22). At step S21, when the oxygen concentration detected by the oxygen concentration measuring unit 42 is less than the reference value (step S21: No), the control unit 33 continues the control of the above-described first embodiment until the oxygen concentration detected by the oxygen concentration measuring unit 42 becomes equal to or greater than the reference value.

Furthermore, when the oxygen concentration detected by the oxygen concentration measuring unit 42 is equal to or greater than the reference value (Step S23: Yes), the control unit 33 controls the deoxidizer supply unit 41 so as to supply the deoxidizer (Step S24). At step S23, when the oxygen concentration detected by the oxygen concentration measuring unit 42 is less than the reference value (step S23: No), the control unit 33 continues the control of the above-described first embodiment until the oxygen concentration detected by the oxygen concentration measuring unit 42 becomes equal to or greater than the reference value.

Thus, the pressurized water nuclear power plant of the second embodiment further includes, in addition to the first embodiment, the oxygen concentration measuring unit 42 that measures the oxygen concentration in the water single phase part, and the control unit 33 controls the deaerator 17 in the secondary system so as to increase the amount of deaerated air in the deaerator 17 when the oxygen concentration measured by the oxygen concentration measuring unit 42 is equal to or greater than the reference value.

According to this pressurized water nuclear power plant, it is possible to suppress the amount of dissolved oxygen by controlling the deaerator 17. That is, this pressurized water nuclear power plant maintains the reducing environment and inhibits corrosion by supplying hydrogen, and can suppress the amount of dissolved oxygen when the oxygen concentration becomes equal to or greater than the reference value. As a result, the pressurized water nuclear power plants can be operated safely. Controlling the deaerator 17 can suppress the amount of dissolved oxygen without using chemicals such as hydrazine or carbohydrazide, thereby reducing the corrosion damage risk to the heat transfer tube 3a of the steam generator 3 while suppressing the use of chemicals having effects on the environment and the plant.

Moreover, the pressurized water nuclear power plant of the second embodiment further includes, in addition to the first embodiment, the oxygen concentration measuring unit 42 that measures the oxygen concentration in the water single phase part and the deoxidizer supply unit 41 that supplies the deoxidizer to the water single phase part of the secondary system, and the control unit 33 controls the deoxidizer supply unit 41 so as to supply the deoxidizer when the oxygen concentration measured by the oxygen concentration measuring unit 42 is equal to or greater than the reference value.

According to this pressurized water nuclear power plant, it is possible to suppress the amount of dissolved oxygen by supplying the deoxidizer. That is, this pressurized water nuclear power plant maintains the reducing environment and inhibits corrosion by supplying hydrogen, and can suppress the amount of dissolved oxygen when the oxygen concentration becomes equal to or greater than the reference value. As a result, the pressurized water nuclear power plants can be operated safely. For example, hydrazine, serving as the deoxidizer, is a chemical having environmental effects, but it is used only when the oxygen concentration becomes equal to or greater the reference value even though the reducing environment is still maintained by supplying hydrogen, which means, it is possible to suppress the corrosion damage risk to the heat transfer tube 3a of the steam generator 3 while reducing the use of the chemical.

The pressurized water nuclear power plant of the second embodiment has a configuration in which the control of the deaerator 17 and the control of the deoxidizer supply unit 41 are both performed, but may have a configuration in which either one of the controls is performed.

The operation method of the pressurized water nuclear power plant of the second embodiment further includes, in addition to embodiment 1, a step of increasing the amount of deaerated air in the deaerator 17 provided to the secondary system when the oxygen concentration is equal to or greater than the reference value after supplying hydrogen and a step of supplying deoxidizer to the water single phase part of the secondary system when the oxygen concentration is equal to or greater than the reference value after increasing the amount of deaerated air.

According to the operation method of this pressurized water nuclear power plant, the supply of hydrogen maintains the reducing environment and inhibits corrosion, and when the oxygen concentration becomes equal to or greater than the reference value, it is possible to suppress the amount of dissolved oxygen by controlling the deaerator 17. Then, when the oxygen concentration becomes equal to or greater the reference value, the dissolved oxygen content can be controlled by supplying the deoxidizer. As a result, the pressurized water nuclear power plants can be operated safely. In this way, when the oxygen concentration becomes equal to or greater than the reference value even through a reducing environment is maintained by supplying hydrogen, first the deaerator 17 is controlled to suppress the amount of dissolved oxygen without using chemicals, and then when the oxygen concentration becomes equal to or greater than the reference value, the chemicals are used to suppress the amount of dissolved oxygen. Thus, it is possible to reduce the corrosion damage risk to the heat transfer tube 3a of the steam generator 3 while suppressing the use of the chemicals.

### Reference Signs List

- 3: Steam generator

- 3a: Heat transfer tube
- 16, 22: Cooling water pipe
- 17: Deaerator
- 31: Hydrogen supply unit
- 32: Hydrogen concentration measuring unit
- 33: Control unit
- 41: Deoxidizer supply unit
- 42: Oxygen concentration measuring unit

## Claims

1. A pressurized water nuclear power plant, comprising:
a hydrogen supply unit configured to supply hydrogen to a water single phase part of a secondary system;
a hydrogen concentration measuring unit configured to measure a hydrogen concentration in the water single phase part; and
a control unit configured to control supply of hydrogen by the hydrogen supply unit so that the hydrogen concentration measured by the hydrogen concentration measuring unit exceeds 10 ppb.

2. The pressurized water nuclear power plant according to claim 1, wherein hydrazine concentration in the water single phase part of the secondary system is less than 20 ppb.

3. The pressurized water nuclear power plant according to claim 1 or 2, further comprising an oxygen concentration measuring unit configured to measure an oxygen concentration in the water single phase part, wherein
when the oxygen concentration measured by the oxygen concentration measuring unit is equal to or greater than a reference value, the control unit controls a deaerator provided in the secondary system so as to increase an amount of deaerated air of the deaerator.

4. The pressurized water nuclear power plant according to any one of claims 1 to 3, further comprising:
an oxygen concentration measuring unit configured to measure the oxygen concentration in the water single phase part; and
a deoxidizer supply unit configured to supply deoxidizer to the water single phase part of the secondary system, wherein
when the oxygen concentration measured by the oxygen concentration measuring unit is equal to or greater than a reference value, the control unit controls the deoxidizer supply unit so as to supply the deoxidizer.

5. An operation method of a pressurized water nuclear power plant, comprising a step of supplying hydrogen to a water single phase part of a secondary system so that hydrogen concentration exceeds 10 ppb.

6. The operation method of the pressurized water nuclear power plant according to claim 5, further comprising the steps of:
increasing an amount of deaerated air in a deaerator provided in the secondary system when oxygen concentration is equal to or greater than a reference value after supplying hydrogen; and
supplying deoxidizer to the water single phase part of the secondary system when the oxygen concentration is equal to or greater than the reference value after increasing the amount of deaerated air.
